# EUROPEAN PATENT APPLICATION

(11) **EP 1 176 825 A2**
(43) Date of publication of application: **30.01.2002**
(21) Application number: 01117865.4
(22) Date of filing: 23.07.2001
(51) Int. Cl.: H04N 7/16

(54) **Advertisement information delivering method using information providing system**

(30) Priority: 25.07.2000 JP 2000223613
(71) Applicant: Nippon Total Net Co., Ltd., Tokyo (JP)
(72) Inventor: Yamaguchi, Takashi, Shinjuku-ku, Tokyo (JP)
(74) Representative: Prechtel, Jörg, Dipl.-Phys. Dr.

(57) **Abstract**

In an information providing system, advertisement information according to text information sent out from an advertisement information delivery center via a public telephone line is received and displayed by an information display provided to a client. An advertisement information delivering method using this system comprises the steps of classifying the client under a group corresponding to at least one of the trade and region thereof; and then delivering the advertisement information to only the information display of a client belonging to a group corresponding to a kind of advertisement information to be delivered among a plurality of clients classified into groups.

## Description

### BACKGROUND OF THE INVENTION

### Field of the Invention

The present invention relates to an advertisement delivering method using an information providing system; and, in particular, to such a method using an information providing system in which advertisement information according to text data sent out from an advertisement information delivery center via a public telephone line is received and displayed by an information display provided to a client.

### Description of the Prior Art

In recent years, teletext broadcasting techniques have rapidly been advancing, and teletext broadcasting has actually been started and utilized for various purposes. In a mode of its utilization, an information display apparatus having means for receiving and displaying teletext broadcasting is installed at a place where the public keep staying for a while, such as a lobby of a hotels or airport and a waiting room of a hospital, so as to display information such as news and weather reports. This mode is favorable in terms of service, since it can provide many people with timely information in real time.

While there has been a demand for displaying commercial messages and the like for a desirable time at a desirable timing on the above-mentioned information display apparatus in addition to public broadcasting such as news and weather reports, it is difficult for the above-mentioned information display apparatus to fully satisfy such a demand.

Also, while advertisement is essential for many corporations in order to sell their products as much as possible, suppressing the cost required for advertisement is an important point for keeping a favorable state of management. Therefore, each corporation strongly wishes to accurately choose purchasers and carry out advertisement targeted at thus chosen purchasers. Its good examples are sporting equipment makers sponsoring golf programs on TV, direct-mailing to all the corporations listed in a certain trade directory, and the like. While purchasers are passive when acquiring information in each of these examples as a matter of course, an enormous cost is inevitably required when utilizing such a conventional advertisement medium although the target cannot always be narrowed.

### SUMMARY OF THE INVENTION

In view of such circumstances, it is an object of the present invention to provide an advertisement information delivering method using an information providing system, by which a seller of a product and the like can efficiently advertise the product at a low cost in a pinpoint manner.

The present invention provides a first advertisement information delivering method using an information providing system in which advertisement information according to text information sent out from an advertisement information delivery center via a public telephone line is received and displayed by an information display provided to a client, the method comprising the steps of:
classifying the client under a group corresponding to a trade thereof; and
then delivering the advertisement information to only the information display of a client belonging to a group corresponding to a kind of advertisement information to be delivered among a plurality of clients classified into groups.

The present invention provides a second advertisement information delivering method using an information providing system in which advertisement information according to text information sent out from an advertisement information delivery center via a public telephone line is received and displayed by an information display provided to a client, the method comprising the steps of:
classifying the client under a group corresponding to a region where the client resides; and
then delivering the advertisement information to only the information display of a client belonging to a group corresponding to a kind of advertisement information to be delivered among a plurality of clients classified into groups.

The present invention provides a third advertisement information delivering method using an information providing system in which advertisement information according to text information sent out from an advertisement information delivery center via a public telephone line is received and displayed by an information display provided to a client; the method comprising the steps of:
classifying the client under a first group corresponding to a trade thereof and under a second group corresponding to a region where the client resides;
then choosing one of the first and second groups when delivering the advertisement information; and
delivering the advertisement information to only the information display of a client belonging to a group corresponding to a kind of advertisement information to be delivered among a plurality of clients classified into groups.

The advertisement information may be prohibited from being delivered to a client provided with a delivery prohibiting condition even when the client belongs to the group corresponding to the kind of advertisement information to be delivered.

Preferably, locations of the clients are schematically indicated on a map displayed on a screen, among which a client belonging to the designated group visibly changes the indication thereof, and detailed data of the client is displayed when thus changed indication of client is touched.

Preferably, locations of the clients are schematically indicated on a map displayed on a screen, among which a client belonging to the designated group visibly changes the indication thereof, and the designated state and designation-released state of the client change over therebetween when thus changed indication of client is clicked or touched with a finger.

Preferably, the information display is disposed at a site of the client where the public keep staying for a while, such as a lobby or waiting room.

The inventors carried out development concerning an advertisement information delivering method using an information providing system, and have achieved the present invention as a result of trial and error. Namely, text information providing systems for displaying commercial messages are installed at sites such as waiting rooms of hospitals and lobbies of airports where many people keep staying for a predetermined time and purchasers of products can be narrowed to a certain extent. To the display systems for the group of people who are likely to be interested in a product of a corporation asking for commercial messages, a commercial message for the product is unilaterally transmitted from a commercial message control center, so as to be continuously displayed on the display system. Also, since people are expected to get bored with the commercial message when they are forced to see it continuously, public teletext broadcasting is also received, so that news, weather reports, and the like are displayed alternately with the commercial message. Thus, the present invention is attained.

Here, teletext broadcasting is used since its display system can be installed handily in a compact manner at any locations, whereby the cost as an advertisement medium is lowered.

### BRIEF DESCRIPTION OF THE DRAWINGS

Fig. 1 is a diagram showing the information providing system using an information receiving and displaying apparatus in accordance with an embodiment of the present invention;
Fig. 2A is a front view of the information receiving and displaying apparatus shown in Fig. 1, whereas Fig. 2B is a side view thereof when a side panel is removed therefrom;
Fig. 3 is a block diagram conceptually showing the inner configuration of the information providing system shown in Fig. 1;
Fig. 4 is a chart showing an embodiment different from that of the information receiving and displaying apparatus shown in Figs. 2A and 2B;
Figs. 5A and 5B are views conceptually showing cases where a specific trade and a specific district are designated, respectively;
Fig. 6 is a flowchart showing the processing operation of a CPU in the information providing system shown in Fig. 1;
Fig. 7 is a schematic view showing an information receiving and displaying apparatus different from that shown in Figs. 2A and 2B; and
Fig. 8 is a schematic view showing a display screen within a text information transmission control center in the method in accordance with the embodiment.

### DESCRIPTION OF THE PREFERRED EMBODIMENTS

In the following, an advertisement information delivering method using the information providing system in accordance with an embodiment of the present invention will be explained.

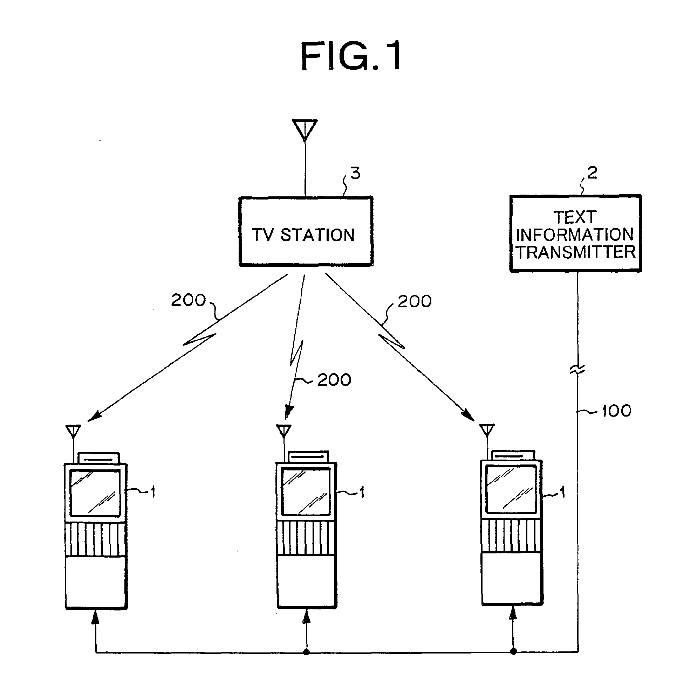

Fig. 1 is a schematic view showing the information providing system used in the method of this embodiment.

This information providing system comprises information receiving and displaying apparatus 1 each of which is constituted by a signal receiving section 1a and an information display section 1b; and a text information transmitting apparatus 2, disposed within a text information transmission control center, for transmitting text information such as commercial messages and quizzes to each information receiving and displaying apparatus 1 through a public telephone line 100. Each image information receiving and displaying apparatus 1 has a function of receiving a public wave 200, transmitted from a TV station 3, on which a teletext signal is superposed.

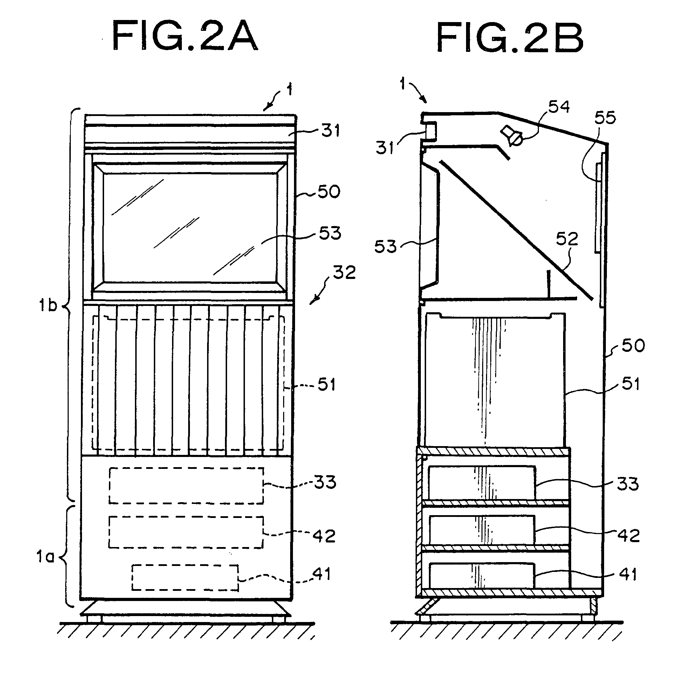

Each information receiving and displaying apparatus 1 is installed, for example, at a lobby of a hotel or airport, a waiting room of a hospital, or the like where the public keep staying for a while. As shown in Figs. 2A and 2B, each information receiving and displaying apparatus 1 comprises a rack housing 50, and the signal receiving section 1a and information display section 1b mounted therein. Specifically, the signal receiving section 1a comprises a receiving section 41 for receiving the text information transmitted through the public telephone line 100 and public wave 200, and a controller 42 for carrying out display-switching operations for the text information, driving operations for displaying the information, and the like. The information display section 1b comprises a video display section 32 having a DVD player 33, a color TV monitor 51 for displaying video information from the DVD player 33, a half mirror 52 for reflecting an image from the color TV monitor 51 and transmitting therethrough an image of a background 55 illuminated by a light source 54, and a glass panel 53 for causing the video information from the DVD player 33 and the image of the background 55 combined by the half mirror 52 to become visible to viewers. Also, the uppermost portion of the apparatus is provided with an electric light display panel 31 on which text information is displayed in a scrolling fashion.

With the information receiving and displaying apparatus 1, viewers can feel ease by seeing fish swimming in the water displayed at the image display section 32, for example, and simultaneously get timely information such as news, weather reports, corporate commercial messages, and the like formed by texts and graphics displayed at the electric light display panel 31 in real time.

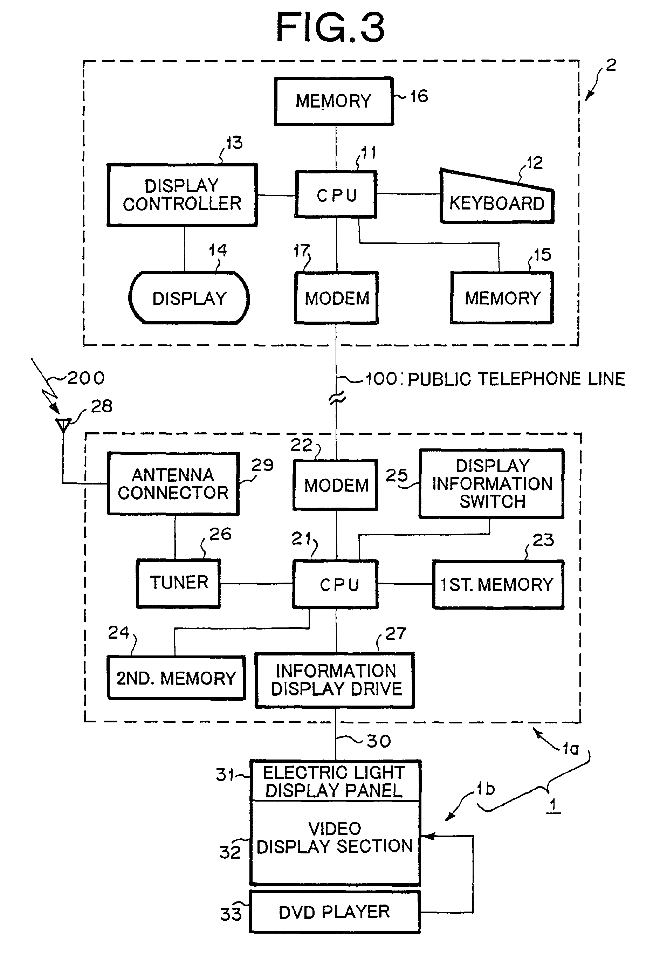

Now, with reference to Fig. 3, the inner configuration of the information providing system equipped with the information receiving and displaying apparatus 1 will be explained.

As shown in Fig. 3, the text information transmitting apparatus 2 disposed within the text information transmission control center comprises a CPU 11, a keyboard 12 connected to the CPU 11, a display control section 13, a memory 15 constituted by a storage medium storing commercial message information or the like to be transmitted, a memory 16 storing information concerning clients where individual information receiving and displaying apparatus 1 to be subjected to transmissions are installed and a table in which the clients are classified into predetermined groups, a modem 17 for transmitting the commercial message information or the like to the public telephone line 100, and a CRT display 14 connected to the display control section 13.

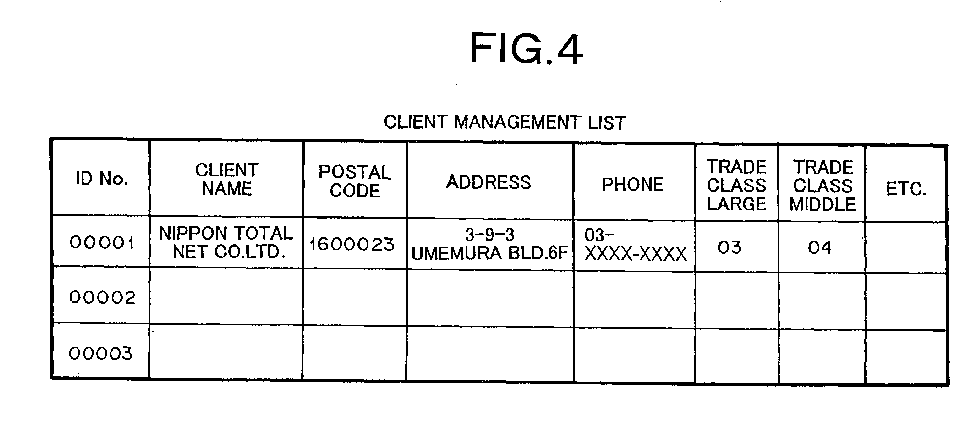

The table stored in the above-mentioned memory 16 includes a client management list in which all the clients are classified into groups by providing them with ID numbers corresponding to their trades. Fig. 4 shows an example of such a client management list.

This client management list indicates information such as the ID number, client name, postal code, address, phone number, large classification of trade, middle classification of trade, and the like for each client. Each of the large classification and medium classification is expressed by two digits of numbers. As for the large classification, "00" is for public facilities such as government and municipal offices, "01" is for financial institutions, "02" is for accommodations, "03" is for hospitals and welfare institutions, and so forth, for example. As for the middle classification when "03" is chosen as the large classification, "01" is for general hospitals, "02" is for internal medicines, "03" is for pediatrics, "04" is for surgeries, "05" is for orthopedic surgeries, and so forth, for example.

Therefore, if the large and middle classifications are designated as "03" and "02," respectively, then all the registered internal medicines can be designated. Table 1 shows an example of the above-mentioned large and middle classifications.

**TABLE 1**

| Classification Code for Trades of Installation Sites | |
|---|---|
| Large classification | Middle classification |
| 00 public facilities such as government and municipal offices | 01 central organ of government |
| | 02 prefectural institutions |
| | 03 city, town, and village institutions |
| | |
| | 99 others |
| 01 financial institutions | 01 large-city-based banks |
| | 02 regional banks |
| | 03 trust banks |
| | 04 foreign-owned banks |
| | 05 credit banks |
| | |
| | 99 others |
| 02 accommodations | 01 city hotels |
| | 02 business hotels |
| | 03 communal lodges |
| | 04 guesthouses/inns |
| | 05 pensions |
| | |
| | 99 others |
| 03 hospitals and welfare institutions | 01 hospitals/medical offices (general hospitals) |
| | 02 hospitals/medical offices (internal/gastroenteric/digestive organs) |
| | 03 hospitals/medical offices (pediatrics) |
| | 04 hospitals/medical offices (surgeries) |
| | 05 hospitals/medical offices (orthopedic surgeries) |
| | |
| | 99 others |
| 04 transport facilities | 01 Japan Rail |

On the other hand, as shown in Fig. 4, the postal code of each client is registered by 7 digits in this client management list. If a postal code (7 digits) is designated, then all the registered clients in the same district referred to with this postal code can be designated.

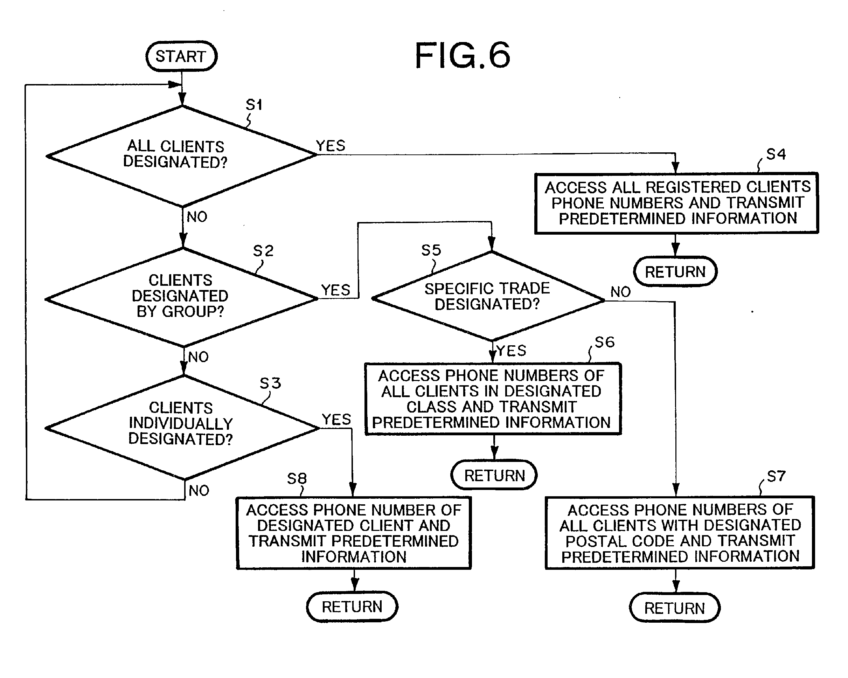

Fig. 6 is a flowchart for explaining a part of operations of the CPU 11.

The CPU 11 successively determines whether a predetermined information item is to be transmitted to all the registered clients or not (S1), whether a group is designated or not (S2), and whether individual clients are designated or not (S3). If all the clients are designated, then the phone numbers of all the registered clients are accessed, so as to transmit the predetermined information item thereto (S4). If the clients are designated by a group, on the other hand, then it is determined whether the group is focused on a specific business or not and whether the group is focused on a specific region or not. In this embodiment, it is assumed that the mode of group designation is limited to the two cases mentioned above.

If it is determined in step 5 (S5) that a specific trade is designated, then the telephone numbers of all the clients belonging to the designated classification (the large or middle classification mentioned above) are accessed, so as to transmit the predetermined information item (S6). If it is determined that a specific trade is not designated, on the other hand, then it is determined that a specific region is designated, whereby the phone numbers of all the clients belonging to the designated postal code are accessed, so as to transmit the predetermined information item (S7).

Further, if it is determined in the above-mentioned step 3 (S3) that the clients are designated individually, then the phone numbers of designated clients are accessed, so as to transmit the predetermined information item (S8).

Since specific trades can be designated alone by a group as mentioned above, a sponsor for commercial messages can make a commercial message delivering contract with clients in desirable trades alone and deliver commercial messages thereto in a one-touch operation. Also, commercial messages can be delivered not only to the whole trade belonging to a large classification, but also to the clients in a field belonging to a specific middle classification in the large classification alone (see Fig. 5A).

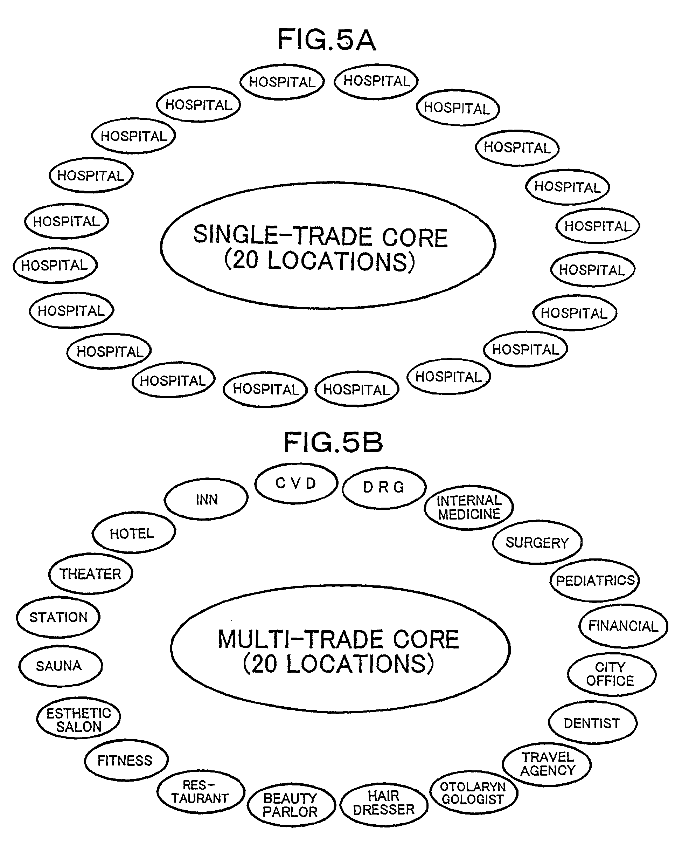

Also, as mentioned above, a specific region can be designated alone by a group, whereby a sponsor for commercial messages can make a commercial message delivering contract only with clients in desirable regions alone and deliver commercial messages thereto in a one-touch operation. For example, commercial messages can be delivered to clients (in various trades) located in specific cities and seaside areas, as well as those (in various trades) located in a city hotel or in a shopping street (see Fig. 5B).

Both conditions of the above-mentioned two group designations may be superposed on each other. Also, trade classifications may further be divided into small classifications and the like, whereas a plurality of classifications may be chosen at the same time upon designation.

When designating a specific region, not only the postal code mentioned above, but also area codes of telephone numbers, separate ID numbers which identify individual regions, and the like can also be used.

Thus constructed text information transmitting apparatus 2 is configured such that an operator can operate the keyboard 12 while observing the CRT display 14, so as to input and select the information to be transmitted from among various kinds of text information (which may include various kinds of information such as quiz and announcement in addition to the commercial message information) and set the time at which it is to be transmitted. Also, conditions which have once been set are written into a table in a memory accompanying the CPU 11, so that predetermined information can automatically be transmitted to the public telephone line 100 via the modem 17 at a predetermined time.

As a consequence, information items different from each other can be transmitted to different kinds of trades or different kinds of regions at predetermined times such that, for example, commercial messages concerning travel goods and the like are transmitted more often to the information receiving and displaying apparatus 1 installed in a hall of a station, whereas commercial message information concerning health information and healthcare products is transmitted more often to the information receiving and displaying apparatus 1 installed at a waiting room of a hospital.

Each information receiving and displaying apparatus 1 will now be explained in detail. First, the signal receiving section 1a comprises a CPU 21; a modem 22, a first memory 23, a second memory 24, a display information switching section 25, a tuner 26, and an information display drive section 27 for transmitting text information to the electric light display panel 31, each connected to the CPU 21; an antenna 28 for receiving the public wave 200 from the TV station 3; and an antenna connector 29 for connecting the antenna 28 to the tuner 26.

Namely, the signal receiving section 1a receives, by way of the modem 22, the text information such as commercial messages transmitted via the public telephone line 100 from the text information transmitting apparatus 2 disposed within the text information transmission control center and transmits thus received information to the CPU 21 as data.

Thereafter, the CPU 21 stores the text information data of commercial messages or the like (hereinafter referred to as first text information data) into the first memory 23.

On the other hand, the signal receiving section 1a has the antenna 28 for receiving the public wave (the wave on which teletext broadcasting is superposed) 200. The desirable text information data (text news, weather reports, and the like; hereinafter referred to as second text information data) superposed on the public wave 200 is selected by the tuner 26 and is transmitted to the CPU 21. Thereafter, the CPU 21 stores the second text information data into the second memory 24.

Subsequently, based on the display information switching signal from the display information switching section 25, the CPU 21 determines which of the first and second text information data to be displayed. The CPU 21 accesses the first memory 23 and second memory 24, respectively, when the first text information data and second text information data are to be displayed, thereby transmitting the text information data stored in thus selected memory 23, 24 to the information display drive section 27.

The information display drive section 27 causes the data transmitted from the CPU 21 to be displayed on the electric light display panel 31 in a scrolling manner, thereby enabling viewers to see information such as text news and weather reports and information such as commercial messages.

The above-mentioned first and second memories 23, 24 may be either memory devices such as RAM, or hard disks or removable disks (e.g., floppy disk, magneto-optical disc, and rewritable compact disc).

The information display switching section 25 may have any configuration as long as it can transmit a signal which is adapted to determine which of the two memories 23, 24 is to be accessed. The outputting of this signal may be carried out according to a preset program or in response to an operation of the operator.

Though the CPU 21 carries out data readout operations for the above-mentioned two memories 23, 24 in this embodiment, memory access means such as DMA (direct memory access) may be provided separately as a matter of course.

The information display section 1b will now be explained. The information display section 1b comprises the electric light display panel 31 for displaying the above-mentioned text information data, the DVD player 33, and the video display section 32 for displaying the video information from the DVD player 33.

The electric light display panel 31 is a rectangular display section which simultaneously displays, for example, about 11 letters, numbers, symbols, illustrations, or the like, in which VFDs (vacuum fluorescent displays) or LEDs emitting green, red, or orange light, for example, are arranged in 264 dots (W) x 24 dots (H) . As these letters and the like are scrolled, various kinds of information such as news, weather reports, and the like are displayed.

Specifically, the video display section 32 has a configuration such as that shown in Figs. 2A and 2B as mentioned above, and displays a fantastic space such as aquarium, undersea water, and outer space on the whole screen according to the video software reproduced by the DVD player 33.

The electric light display panel 31 is not restricted to the one in which LEDs are arranged. It may have any configuration as long as it can display a plurality of letters simultaneously and allow a scrolling function. For example, an LCD (liquid crystal display) panel can be used instead.

Also, the configuration of the video display section 32 is not limited to that mentioned above, as long as a desirable image can be displayed adjacent to the display of text information data. In place of the CRT display, a liquid crystal display or plasma display can be used as a matter of course. The video display section 32 may also be arranged such that the image displayed on the display screen can directly be seen without the aid of the half mirror.

Further, the video reproducing means for reproducing the video information data transmitted to the video display section 32 is not limited to the DVD player. When the video information recording medium is a video tape, laser disc, compact disc, and the like, the video reproducing means can be a VTR, laser disc player, compact disc player, and the like, respectively, as a matter of course.

The information display apparatus used in the method of the present invention and the information providing system using the same are not limited to those mentioned above, and can be changed in various manners.

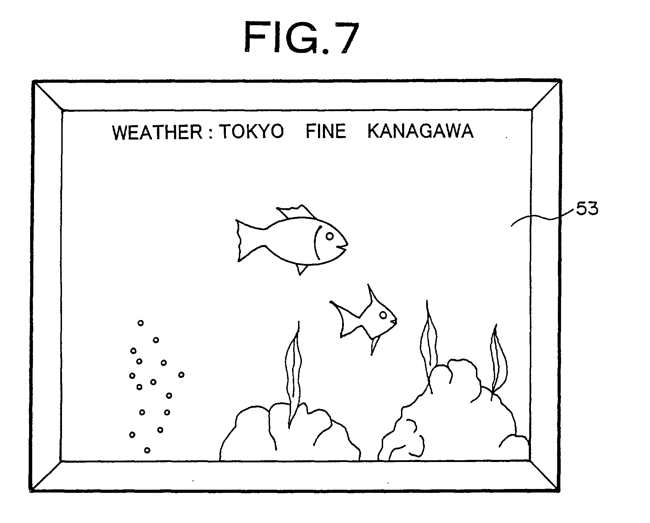

For example, though the text information and the like are displayed on the electric light display panel 31 while the video information is displayed on the video display section 32 in the above-mentioned embodiment, the text information and the like can be superimposed on the video information as shown in Fig. 7, whereby the apparatus can be made more compact. Further, the video display screen can be divided by a predetermined ratio, such that, for example, only the text information is displayed in one area (e.g., upper area), whereas only the video information is displayed in the other region (e.g., lower area).

In the column of "Etc." in Fig. 4, particularly important clients may be marked with an asterisk such that information is transmitted to only the above-mentioned clients marked with the asterisk, or clients to be excluded may be marked with a circle such that information is not transmitted to those marked with the circle as mentioned above when designating the clients.

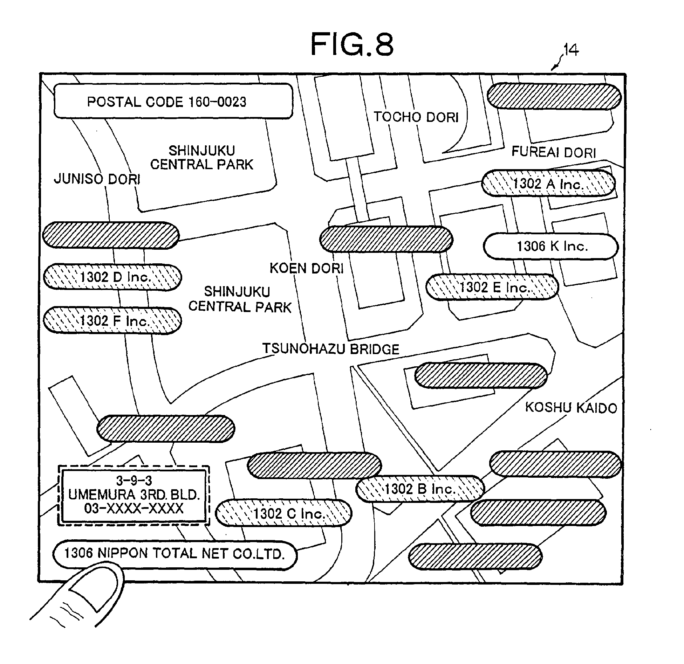

Also, the designation of clients within the text information transmission control center can be verified on a map displayed on a screen as shown in Fig. 8, for example.

For example, if a sponsor for commercial messages designates a specific desirable region by a postal code, then a map of this region is displayed on the screen of display 14, and names of registered clients are displayed on the screen in the vicinity of their locations together with trade classification numbers. Among the registered clients, the names of finally designated clients are provided with a background color different from that of the other clients. For example, if the sponsor designates a specific desirable trade according to a trade classification as an additional requirement, then names of clients belonging to thus designated trade classification are provided with a background color different from that of the other clients. Fig. 8 exemplifies a case where "160-0023" (indicating Nishi-Shinjuku district) as a postal code, and "1306" (large classification "16" referring to common corporations and the like, and middle classification "06" referring to the art of communications) as the trade classification, whereas it can be seen that the background color of the name sections is changed (those with the large classification of "13" though not belonging to the middle classification of "06" also change their background color somewhat). In this embodiment, the display 14 is configured so as to function as a touch panel for the clients whose name sections have changed the background color. Hence, if the name section of an aimed client is touched with a finger, detailed information of the client is displayed on the screen. Though the detailed information items are those (e.g., phone number, detailed address, etc.) recorded in the client management list shown in Fig. 4, other items (e.g., the number of employees, capital, and the like of the client) stored in memories may be displayed as well. Also, instead of the touch panel, a mouse pointer may be placed on a desirable position on the display 14 and single-clicked, so as to display the above-mentioned detailed information.

Alternatively, the part displaying a name on the display 14 may consecutively be touched twice with a finger (or double-clicked with a mouse pointer placed thereon), whereby the client can individually be designated or released from its designation.

When designating a client to transmit commercial message information as requested by a sponsor for commercial messages in the method in accordance with this embodiment, an operator in the text information transmission management center can verify the client together with the client information on a map of the display 14. Also, operations for individually designating clients or releasing their designations are simplified, whereby predetermined information items can be delivered to predetermined clients rapidly in a simple manner as required by the sponsor for commercial messages. As a consequence, functions as a pinpoint medium for narrowly targeted clients can further be enhanced.

The mode of visibly changing the display of clients is not limited to the one in which the background color of name section changes. For example, the frame of name display section may change, and the font size of name may change.

According to the advertisement information delivering method using an information providing system in accordance with the present invention, commercial message information which corporations and the like wish to broadcast can easily be transmitted to predetermined clients together with timely text information such as news, weather reports, and the like transmitted by teletext broadcasting, so that the public happening to be near each information display apparatus can be provided with the information, whereby both of a public service function and an advertisement function demanded by the corporation can be satisfied at the same time.

In the advertisement delivering method using the information providing system, among a plurality of clients classified into groups according to their trades and/or residing regions beforehand, advertisement information is delivered to only information display apparatus provided to the clients belonging to a group corresponding to the kind of advertisement information to be delivered, whereby advertisement can be effected easily and efficiently to successively chosen purchasers as targets.

In an information providing system, advertisement information according to text information sent out from an advertisement information delivery center via a public telephone line is received and displayed by an information display provided to a client. An advertisement information delivering method using this system comprises the steps of classifying the client under a group corresponding to at least one of the trade and region thereof; and then delivering the advertisement information to only the information display of a client belonging to a group corresponding to a kind of advertisement information to be delivered among a plurality of clients classified into groups.

## Claims

1. An advertisement information delivering method using an information providing system in which advertisement information according to text information sent out from an advertisement information delivery center via a public telephone line is received and displayed by an information display provided to a client, said method comprising the steps of:
classifying said client under a group corresponding to a trade thereof; and
then delivering said advertisement information to only said information display of a client belonging to a group corresponding to a kind of advertisement information to be delivered among a plurality of clients classified into groups.

2. An advertisement information delivering method according to claim 1, wherein said advertisement information is prohibited from being delivered to a client provided with a delivery prohibiting condition even when said client belongs to said group corresponding to said kind of advertisement information to be delivered.

3. An advertisement information delivering method according to one of claims 1 and 2, wherein locations of said clients are schematically indicated on a map displayed on a screen, among which a client belonging to said designated group visibly changes the indication thereof, and detailed data of said client is displayed when thus changed indication of client is clicked or touched with a finger.

4. An advertisement information delivering method according to one of claims 1 to 3, wherein locations of said clients are schematically indicated on a map displayed on a screen, among which a client belonging to said designated group visibly changes the indication thereof, and said designated state and designation-released state of said client change over therebetween when thus changed indication of client is clicked or touched with a finger.

5. An advertisement information delivering method according to one of claims 1 to 4, wherein said information display is disposed at a site of said client where the public keep staying for a while.

6. An advertisement information delivering method using an information providing system in which advertisement information according to text information sent out from an advertisement information delivery center via a public telephone line is received and displayed by an information display provided to a client, said method comprising the steps of:
classifying said client under a group corresponding to a region where said client resides; and
then delivering said advertisement information to only said information display of a client belonging to a group corresponding to a kind of advertisement information to be delivered among a plurality of clients classified into groups.

7. An advertisement information delivering method according to claim 6, wherein said advertisement information is prohibited from being delivered to a client provided with a delivery prohibiting condition even when said client belongs to said group corresponding to said kind of advertisement information to be delivered.

8. An advertisement information delivering method according to one of claims 6 and 7, wherein locations of said clients are schematically indicated on a map displayed on a screen, among which a client belonging to said designated group visibly changes the indication thereof, and detailed data of said client is displayed when thus changed indication of client is clicked or touched with a finger.

9. An advertisement information delivering method according to one of claims 6 to 8, wherein locations of said clients are schematically indicated on a map displayed on a screen, among which a client belonging to said designated group visibly changes the indication thereof, and said designated state and designation-released state of said client change over therebetween when thus changed indication of client is clicked or touched with a finger.

10. An advertisement information delivering method according to claim 6 to 9, wherein said information display is disposed at a site of said client where the public keep staying for a while.

11. An advertisement information delivering method using an information providing system in which advertisement information according to text information sent out from an advertisement information delivery center via a public telephone line is received and displayed by an information display provided to a client, said method comprising the steps of:
classifying said client under a first group corresponding to a trade thereof and under a second group corresponding to a region where said client resides;
then choosing one of said first and second groups when delivering said advertisement information; and
delivering said advertisement information to only said information display of a client belonging to a group corresponding to a kind of advertisement information to be delivered among a plurality of clients classified into groups.

12. An advertisement information delivering method according to claim 11, wherein said advertisement information is prohibited from being delivered to a client provided with a delivery prohibiting condition even when said client belongs to said group corresponding to said kind of advertisement information to be delivered.

13. An advertisement information delivering method according to one of claims 11 and 12, wherein locations of said clients are schematically indicated on a map displayed on a screen, among which a client belonging to said designated group visibly changes the indication thereof, and detailed data of said client is displayed when thus changed indication of client is clicked or touched with a finger.

14. An advertisement information delivering method according to one of claims 11 to 13, wherein locations of said clients are schematically indicated on a map displayed on a screen, among which a client belonging to said designated group visibly changes the indication thereof, and said designated state and designation-released state of said client change over therebetween when thus changed indication of client is clicked or touched with a finger.

15. An advertisement information delivering method according to one of claims 11 to 14, wherein said information display is disposed at a site of said client where the public keep staying for a while.
